# EUROPEAN PATENT APPLICATION

(11) **EP 3 064 922 A1**
(43) Date of publication of application: **07.09.2016**
(21) Application number: 16158232.5
(22) Date of filing: 02.03.2016
(51) Int. Cl.: G01M 15/04

(54) **DIAGNOSIS DEVICE AND DIAGNOSIS METHOD FOR TURBOCHARGER**

(30) Priority: 02.03.2015 JP 2015040425
(71) Applicant: Toyota Jidosha Kabushiki Kaisha, Toyota-shi, Aichi 471-8571 (JP)
(72) Inventor: YAMADA, Tomoko, Aichi-ken, Aichi 471-8571 (JP); FUJIMURA, Kazushiro, Aichi-ken, Aichi 471-8571 (JP); MATSUSHITA, Tomohiko, Aichi-ken, Aichi 471-8571 (JP); OOTA, Hirohiko, Aichi-ken, Aichi 471-8571 (JP)
(74) Representative: D Young & Co LLP

(57) **Abstract**

A diagnosis device for a turbocharger, the diagnosis device includes an electronic control unit (25). The electronic control unit is configured to calculate a turbine expansion ratio (PIT) as a ratio of a pressure of the exhaust gas flowing into a turbine (19) of the turbocharger to the pressure of the exhaust gas flowing out from the turbine (19); operate a deterioration evaluation value toward a predetermined one of an increase side and a decrease side when the turbine expansion ratio (PIT) exceeds a threshold (α); and determine a replacement timing of a turbine component (19a) when a total operation amount of the deterioration evaluation is equal to or larger than a specified value, the total operation amount being an operation amount from an initial value of the deterioration evaluation value.

## Description

### BACKGROUND

### 1. Technical Field

The disclosure relates to a diagnosis device and a diagnosis method for a turbocharger.

### 2. Description of Related Art

A turbine component of a turbocharger such as a turbine wheel has a service life determined in accordance with, for example, a traveling distance of a vehicle in which the turbocharger is mounted. The turbine component is replaced when the service life is over. When a rotation speed of a turbine reaches a specific rotation speed (resonance rotation speed), resonance is generated in the turbine and a larger-than-expected load might be applied to the component. In addition, fatigue-based strength reduction might proceed at a faster-than-expected pace when the generation of the resonance is repeated.

Japanese Patent Application Publication No. 2014-084772 discloses a turbocharger diagnosis device that estimates a component replacement timing based on the number of times the turbine rotation speed reaches the resonance rotation speed and a resonance stress applied to the turbine wheel in that case.

### SUMMARY

In the case of a low exhaust gas pressure on a turbine outlet side (atmosphere side), a flow force of exhaust gas during passage through the turbine increases even under the same condition of exhaust gas inflow into the turbine such as a flow rate of the exhaust gas and an opening degree of a variable nozzle. In this case, the load that is applied to the turbine component increases. Accordingly, when the turbocharger is used at a low atmospheric pressure in a high-altitude area or the like, the larger-than-expected load is applied to the turbine component even when no resonance is generated, and the progress of the fatigue-based strength reduction may be accelerated.

The disclosure provides a diagnosis device and a diagnosis method for a turbocharger that allow an appropriate diagnosis of the necessity of turbine component replacement.

An example aspect of the disclosure provides a diagnosis device for a turbocharger, the turbocharger mounted on an engine, the turbocharger including a turbine, and the turbocharger is configured to supercharge intake air by driving the turbine with a flow force of exhaust gas of the engine, the diagnosis device includes an electronic control unit. The electronic control unit is configured to: calculate a turbine expansion ratio as a ratio of a pressure of the exhaust gas flowing into the turbine to the pressure of the exhaust gas flowing out from the turbine; operate a deterioration evaluation value toward a predetermined one of an increase side and a decrease side when the turbine expansion ratio exceeds a threshold; and determine a replacement timing of a turbine component when a total operation amount of the deterioration evaluation is equal to or larger than a specified value, the total operation amount being an operation amount from an initial value of the deterioration evaluation value.

When no resonance is generated, a load that is applied to the turbine component increases as the turbine expansion ratio increases. The turbine expansion ratio is a ratio of a volume per unit mass of the exhaust gas prior to passage through the turbine and a volume per unit mass of the exhaust gas subsequent to the passage through the turbine. Accordingly, whether or not an excessive load is applied to the turbine component can be determined based on whether or not the turbine expansion ratio exceeds the threshold.

According to the turbocharger diagnosis device described above, the value of the deterioration evaluation value is operated (incremented or decremented) with respect to either the increase side or the decrease side each time the turbine expansion ratio exceeds the threshold. The total amount of the value operation of the deterioration evaluation value from the initial value (total operation amount) increases as a fatigue-based reduction in a strength of the turbine component proceeds. Accordingly, the necessity of the replacement of the turbine component can be appropriately diagnosed by the replacement of the turbine component being determined to be required when the total operation amount becomes equal to or higher than the specified value.

In the diagnosis device, the electronic control unit may be configured to operate the value of the deterioration evaluation value by a predetermined value every time the turbine expansion ratio exceeds the threshold. According to this configuration, an operation of the value of the amount proportional to the number of times the turbine expansion ratio exceeds the threshold is performed regarding the deterioration evaluation value. In the diagnosis device, the electronic control unit may be configured to operate the value of the deterioration evaluation value to be increased as a difference between the threshold and the turbine expansion ratio increases when the turbine expansion ratio exceeds the threshold. According to this configuration, the value of the deterioration evaluation value is operated to be increased as the turbine expansion ratio exceeds the threshold to a larger extent and a larger load is applied to the turbine component.

In a case where the turbocharger is used at a low atmospheric pressure, the turbine expansion ratio tends to increase and an excessive load is likely to be applied to the turbine component. Accordingly, when the turbocharger is used at the low atmospheric pressure, it is desirable that the turbine component is replaced in a stage in which the extent of the fatigue-based strength reduction is smaller. In the diagnosis device, the specified value may be lower at a low atmospheric pressure than at a high atmospheric pressure. According to this configuration, at the low atmospheric pressure, it is determined that the component needs to be replaced in the stage in which the extent of the fatigue-based strength reduction is smaller. Accordingly, the necessity of the replacement of the turbine component can be further appropriately determined.

Another example aspect of the disclosure provides a diagnosis method for a turbocharger, the turbocharger mounted on an engine, the turbocharger including a turbine, and the turbocharger is configured to supercharge intake air by driving the turbine with a flow force of exhaust gas of the engine, the diagnosis method includes: calculating a turbine expansion ratio as a ratio of a pressure of the exhaust gas flowing into the turbine to the pressure of the exhaust gas flowing out from the turbine; operating a deterioration evaluation value toward a predetermined one of an increase side and a decrease side when the turbine expansion ratio exceeds a threshold; and determining a replacement timing of a turbine component when a total operation amount of the deterioration evaluation is equal to or larger than a specified value, the total operation amount being an operation amount from an initial value of the deterioration evaluation value.

### BRIEF DESCRIPTION OF THE DRAWINGS

Features, advantages, and technical and industrial significance of exemplary embodiments will be described below with reference to the accompanying drawings, in which like numerals denote like elements, and wherein:
FIG. 1 is a schematic diagram illustrating configurations of an intake system and an exhaust system of a turbocharger-attached engine to which a turbocharger diagnosis device according to a first embodiment is applied;
FIG. 2 is a flowchart of a replacement timing estimation routine that is executed in the turbocharger diagnosis device according to this embodiment;
FIG. 3 is a graph illustrating a relationship between a replacement timing determination value that is calculated in the replacement timing estimation routine and an atmospheric pressure;
FIG. 4A is a time chart illustrating an example of a transition pattern of a turbine expansion ratio pertaining to a case where a progress of fatigue-based strength reduction becomes slower;
FIG. 4B is a time chart illustrating an example of the transition pattern of the turbine expansion ratio pertaining to a case where the progress of the fatigue-based strength reduction becomes faster; and
FIG. 5 is a flowchart of a replacement timing estimation routine that is executed by a turbocharger diagnosis device according to a second embodiment.

### DETAILED DESCRIPTION OF EMBODIMENTS

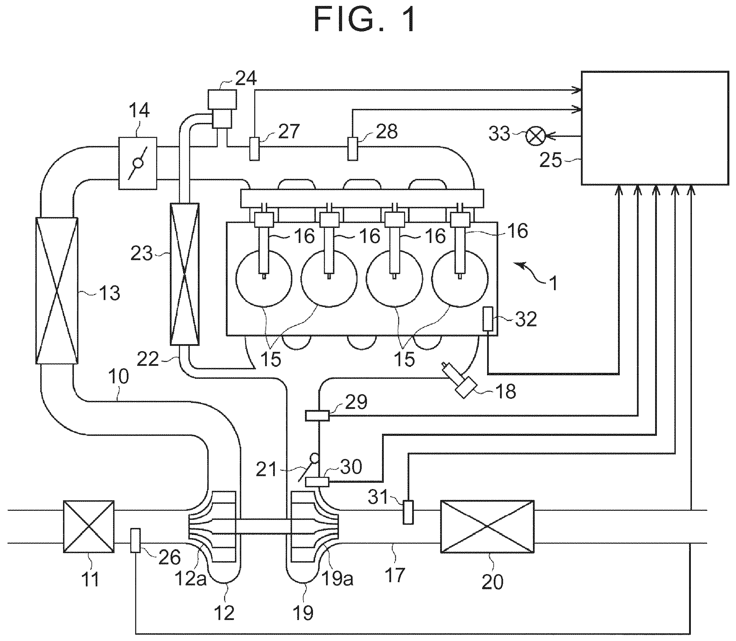

Hereinafter, a first embodiment of a turbocharger diagnosis device will be described in detail with reference to FIGS. 1 to 3. The diagnosis device according to this embodiment is applied to a turbocharger that is mounted on an automotive diesel engine.

In an intake passage 10 of a diesel engine 1 where the turbocharger to which the diagnosis device according to this embodiment is applied is mounted, an air cleaner 11, a compressor 12, an intercooler 13, and an intake throttle valve 14 are placed in this order from the upstream side of the intake passage 10 as illustrated in FIG. 1. The air cleaner 11 filters intake air that is taken into the intake passage 10. The compressor 12 pressurizes the intake air as a built-in compressor wheel 12a rotates. The intercooler 13 cools the intake air pressurized in the compressor 12. The intake throttle valve 14 adjusts a flow rate of the intake air flowing through the intake passage 10 (the amount of suctioned air) through a change in valve opening degree.

A part of the intake passage 10 on the downstream side of the intake throttle valve 14 branches into respective cylinders of the diesel engine 1. The branch parts of the intake passage 10 are connected to combustion chambers 15 of the respective cylinders. Fuel injection valves 16 are installed at the combustion chambers 15 of the respective cylinders. In the combustion chambers 15 of the respective cylinders, combustion of an air-fuel mixture of the intake air which is suctioned through the intake passage 10 and a fuel which is injected from the fuel injection valves 16 is performed.

Exhaust gas resulting from the combustion of the air-fuel mixture in the combustion chambers 15 is released to outside air through an exhaust passage 17. In the exhaust passage 17, a fuel addition valve 18, a turbine 19, and a PM filter 20 are installed in this order from the upstream side of the exhaust passage 17. The fuel addition valve 18 adds an unburned fuel to the exhaust gas flowing through the exhaust passage 17. A turbine wheel 19a that is connected to the compressor wheel 12a to be capable of rotating integrally with the compressor wheel 12a is built into the turbine 19, and the turbine 19 constitutes the turbocharger with the compressor 12. The PM filter 20 collects particulate matter (PM) in the exhaust gas and removes the collected PM by combustion in response to the addition of the unburned fuel to the exhaust gas by the fuel addition valve 18.

In the turbocharger, a flow force of the blown exhaust gas causes the turbine wheel 19a to rotate. Then, the compressor wheel 12a rotates in conjunction with the rotation of the turbine wheel 19a. Then, the intake air introduced in the combustion chambers 15 is supercharged. In other words, the turbocharger supercharges the intake air in the diesel engine 1 by the turbine 19 being driven by the flow force of the exhaust gas. At an exhaust gas blowout port toward the turbine wheel 19a of the turbine 19, a variable nozzle 21 is installed so that an opening area of the exhaust gas blowout port changes in accordance with a change in nozzle opening degree. When the nozzle opening degree of the variable nozzle 21 is controlled, the flow force of the exhaust gas blown to the turbine wheel 19a is adjusted. In other words, a supercharging pressure that is a pressure of the intake air after the supercharging is adjusted by the nozzle opening degree of the variable nozzle 21 being controlled.

An exhaust gas recirculation (EGR) passage 22 (hereinafter, referred to as an EGR passage 22) is disposed in the diesel engine 1. The EGR passage 22 allows a part of the exhaust passage 17 on the upstream side of the turbine 19 and a part of the intake passage 10 on the downstream side of the intake throttle valve 14 to communicate with each other. An EGR cooler 23 and an EGR valve 24 are disposed in the EGR passage 22. The EGR cooler 23 cools the exhaust gas recirculated into the intake air through the EGR passage 22. The EGR valve 24 adjusts the amount of the recirculation of the exhaust gas into the intake air by changing a flow path area of the exhaust gas based on a change in valve opening degree.

The diesel engine 1 that is provided with an intake system and an exhaust system which have the above-described configurations is controlled by an electronic control unit (ECU) 25. The electronic control unit 25 is provided with a central process unit that performs various types of calculation process regarding engine control, a read-only memory where a program and data for control are stored, a readable and writable memory where a calculation result of the central process unit and a detection result of each sensor are temporarily stored, an input port for receiving a signal from the outside, and an output port for transmitting a signal to the outside.

Detection signal from various sensors disposed outside the diesel engine 1 are input to the input port of the electronic control unit 25. These sensors include an atmospheric pressure sensor 26, an intake air temperature sensor 27, an intake air pressure sensor 28, a turbine inlet gas temperature sensor 29, a turbine inlet gas pressure sensor 30, a turbine outlet gas pressure sensor 31, and an NE sensor 32. The atmospheric pressure sensor 26 detects the pressure of the intake air at a part of the intake passage 10 on the upstream side of the compressor 12, that is, an atmospheric pressure EPA. The intake air temperature sensor 27 detects a temperature of the intake air flowing into the combustion chambers 15. The intake air pressure sensor 28 detects the pressure of the intake air at a part of the intake passage 10 on the downstream side of the intake throttle valve 14. The turbine inlet gas temperature sensor 29 detects a temperature of the exhaust gas at a part of the exhaust passage 17 on the upstream side of the turbine 19 (inlet gas temperature TIN). The turbine inlet gas pressure sensor 30 detects a pressure of the exhaust gas at a part of the exhaust passage 17 between the variable nozzle 21 and the turbine 19, that is, the pressure of the exhaust gas flowing into the turbine 19 (inlet gas pressure PIN). The turbine outlet gas pressure sensor 31 detects the pressure of the exhaust gas at a part of the exhaust passage 17 on the downstream side of the turbine 19, that is, the pressure of the exhaust gas flowing out from the turbine 19 (outlet gas pressure POUT). The NE sensor 32 detects a rotation speed of the diesel engine 1 (engine rotation speed NE). A malfunction indication lamp (MIL) 33 is connected to the output port of the electronic control unit 25 to notify a user that the turbine wheel 19a is required to be replaced.

In the automotive turbocharger, a service life of the turbine wheel 19a is determined in accordance with a traveling distance or the like of a vehicle in which the turbocharger is mounted. The replacement of the turbine wheel 19a is performed when the service life of the turbine wheel 19a is over. This service life is set on an assumption of the use of the turbocharger at a standard atmospheric pressure (such as a standard atmospheric pressure at a sea level). In a low-atmospheric pressure environment such as a high-altitude area, however, the exhaust gas pressure on an exhaust gas discharge side of the turbine 19 decreases, and thus an expansion ratio of the turbine 19 (turbine expansion ratio) increases by the same amount. Accordingly, at a low atmospheric pressure, a larger-than-expected load is applied and a reduction in a strength of the turbine wheel 19a attributable to fatigue proceeds faster than expected in some cases.

According to the embodiment, the turbocharger is designed such that a resonance rotation speed of the turbine wheel 19a is out of a range of use of a turbine rotation speed and the turbine wheel 19a generates no resonance.

In the turbocharger diagnosis device according to this embodiment, the electronic control unit 25 performs not only the engine control but also a replacement timing estimation process for determining the necessity of the replacement of the turbine wheel 19a that is a component of the turbine 19 (turbine component) and estimating a replacement timing of the turbine wheel 19a. The replacement timing estimation process allows the necessity of the replacement of the turbine wheel 19a to be determined with an actual situation of the fatigue-based reduction in the strength of the turbine wheel 19a better reflected. Hereinafter, details of the replacement timing estimation process will be described. In this embodiment, the electronic control unit 25 that performs the above-described determination is a configuration equivalent to a determination unit.

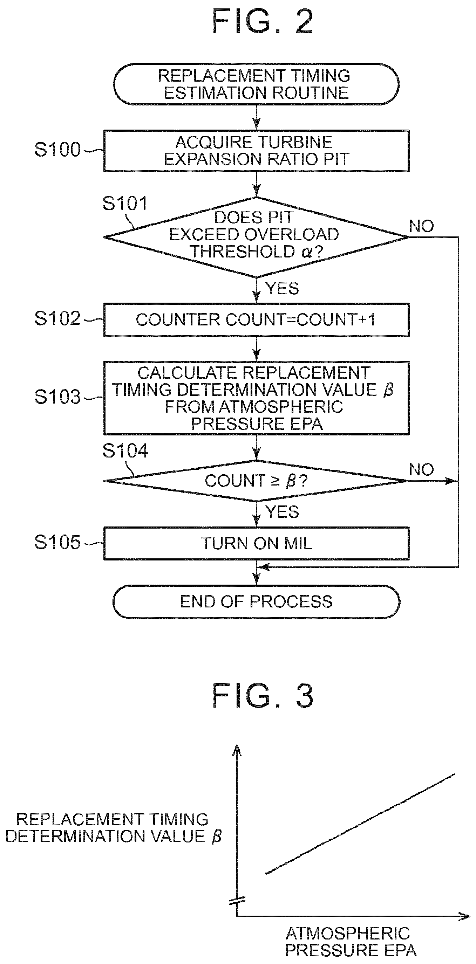

FIG. 2 is a flowchart illustrating a replacement timing estimation routine that the electronic control unit 25 executes for the replacement timing estimation process. The electronic control unit 25 is configured to executes the replacement timing estimation routine that is illustrated in FIG. 2 for each specified control cycle while the diesel engine 1 is in operation.

In Step S100, the first stage subsequent to an initiation of the process of this routine, a current value of the expansion ratio of the exhaust gas in the event of passage through the turbine 19 (turbine expansion ratio PIT) is acquired. In this embodiment, the electronic control unit 25 acquires the current value of the turbine expansion ratio PIT by calculating a ratio of the value of the inlet gas pressure PIN detected by the turbine inlet gas pressure sensor 30 to the value of the outlet gas pressure POUT detected by the turbine outlet gas pressure sensor 31 as the current value of the turbine expansion ratio PIT.

Then, in Step S101, it is determined whether or not the turbine expansion ratio PIT exceeds a specified overload threshold α in a period from the execution of this routine in a previous control cycle to the execution of this routine in a current control cycle. In other words, it is determined whether or not the value of the turbine expansion ratio PIT during the execution of this routine in the previous control cycle is equal to or lower than the overload threshold α, and the value of the turbine expansion ratio PIT during the execution of this routine in the current control cycle exceeds the overload threshold α.

A load that is applied to the turbine wheel 19a when no resonance is generated increases as the turbine expansion ratio PIT increases. Accordingly, a magnitude of the load that is applied to the turbine wheel 19a can be estimated from the current value of the turbine expansion ratio PIT. An upper limit value of the turbine expansion ratio PIT at which the fatigue-based strength reduction can reliably fall within an expected range is set to the value of the overload threshold α. Accordingly, when the current value of the turbine expansion ratio PIT exceeds the overload threshold α, it is likely that an excessive load accelerating the progress of the fatigue-based strength reduction is applied to the turbine wheel 19a.

When the current value of the turbine expansion ratio PIT does not exceed the overload threshold α (NO), the current process of this routine is terminated as it is. When the current value of the turbine expansion ratio PIT exceeds the overload threshold α (YES), the process proceeds to Step S102.

After the process proceeds to Step S102, "1" is added to a value of a counter COUNT as a deterioration evaluation value in Step S102. An initial value of "0" is set to the default value of the counter COUNT. The value is reset to the initial value "0" during the replacement of the turbine wheel 19a.

Then, in Step S103, a replacement timing determination value β is calculated from the value of the atmospheric pressure EPA detected by the atmospheric pressure sensor 26. The calculation of the replacement timing determination value β is performed by the use of a calculation map stored in a read write-only memory of the electronic control unit 25. The value of the replacement timing determination value β by value of the atmospheric pressure EPA is stored in the calculation map.

A correspondence relationship between the atmospheric pressure EPA and the replacement timing determination value β as an example of the calculation map is illustrated in FIG. 3. As illustrated in FIG. 3, a value that decreases as the atmospheric pressure EPA decreases is set to the value of the replacement timing determination value β.

Then, in Step S104, it is determined whether or not the value of the counter COUNT is equal to or higher than the value of the replacement timing determination value β that is calculated in Step S103. When the value of the counter COUNT is lower than the value of the replacement timing determination value β (NO), the current process of this routine is terminated as it is. When the value of the counter COUNT is equal to or higher than the value of the replacement timing determination value β (YES), the process proceeds to Step S105. Then, in Step S105, the current process of this routine is terminated after the malfunction indication lamp 33 is turned on. The malfunction indication lamp 33 remains on in Step S105 in a case where the malfunction indication lamp 33 is already on in this case.

Hereinafter, a turbocharger diagnosis aspect resulting from the execution of the replacement timing estimation routine in the turbocharger diagnosis device according to this embodiment will be described. In the turbocharger diagnosis device according to this embodiment, "1" is added to the value of the counter COUNT whenever the turbine expansion ratio PIT exceeds the overload threshold α. In other words, the value of the counter COUNT is operated by a constant of "1" toward an increase side every time the turbine expansion ratio PIT exceeds the overload threshold α. The value of the counter COUNT that is operated in this manner represents how many times the turbine expansion ratio PIT exceeds the overload threshold α after the turbine wheel 19a begins to be used. In this embodiment, the initial value of the counter COUNT is set to "0", and thus the current value of the counter COUNT corresponds to a total operation amount of the value from the initial value to date.

In the diagnosis device according to this embodiment, the malfunction indication lamp 33 is turned on, so that the user is notified of the necessity of the replacement of the turbine wheel 19a, when the value of the counter COUNT is equal to or higher than the replacement timing determination value β. In other words, in this embodiment, it is determined that the turbine wheel 19a needs to be replaced when the number of times the turbine expansion ratio PIT exceeds the overload threshold α is equal to or higher than the value of the replacement timing determination value β.

The strength of the turbine wheel 19a is reduced, with the fatigue accumulated, every time the excessive load is applied. Accordingly, the degree to which the fatigue-based reduction in the strength of the turbine wheel 19a proceeds can be estimated to some extent from the number of times the turbine expansion ratio PIT exceeds the overload threshold α. Accordingly, once the number of times reaches a certain number of times, it can be determined that the strength of the turbine wheel 19a is likely to be lowered to a level at which the turbine wheel 19a needs to be replaced.

In a case where the turbocharger is used at a low atmospheric pressure, the turbine expansion ratio PIT tends to increase and the excessive load is more and more likely to be applied to the turbine wheel 19a. Accordingly, when it comes to the turbocharger that is used at the low atmospheric pressure, it is desirable that the replacement of the turbine wheel 19a is performed in a stage in which the extent of the fatigue-based strength reduction is smaller.

According to the turbocharger diagnosis device of this embodiment, a lower value is set to the replacement timing determination value β at the low atmospheric pressure than at a high atmospheric pressure. When the lower value is set to the replacement timing determination value β, the number of times the turbine expansion ratio PIT exceeds the overload threshold α which is required for the determination that the turbine wheel 19a needs to be replaced becomes lower. Accordingly, in a case where the turbocharger is used at a low atmospheric pressure, the replacement of the turbine wheel 19a is determined to be required in the stage in which the extent of the fatigue-based strength reduction is smaller.

The following effects can be achieved by the turbocharger diagnosis device according to this embodiment described above. In this embodiment, the electronic control unit 25 calculates the turbine expansion ratio PIT, and operates the value of the counter COUNT toward the increase side when the calculated turbine expansion ratio PIT exceeds the overload threshold α. In addition, the electronic control unit 25 determines that the turbine wheel 19a needs to be replaced when the total operation amount of the value of the counter COUNT from the initial value becomes equal to or larger than a specified value (replacement timing determination value β). Accordingly, the necessity of the replacement of the turbine wheel 19a can be appropriately diagnosed.

In this embodiment, the electronic control unit 25 operates the value of the counter COUNT by the constant "1" toward the increase side every time the turbine expansion ratio PIT exceeds the overload threshold α. The value of the counter COUNT that is subjected to this value operation represents the number of times of overload application to the turbine wheel 19a subsequent to the beginning of the use. Accordingly, the necessity of the replacement of the turbine wheel 19a can be determined in accordance with the degree of overload-based strength reduction.

In this embodiment, the electronic control unit 25 sets the lower value to the replacement timing determination value β at the low atmospheric pressure than at the high atmospheric pressure. Accordingly, the replacement of the turbine wheel 19a is determined to be required in the stage in which the total operation amount of the value of the counter COUNT from the initial value is smaller at the low atmospheric pressure than at the high atmospheric pressure. Accordingly, the necessity of the replacement of the turbine wheel 19a can be further appropriately determined in accordance with a difference in required strength depending on the environment of use.

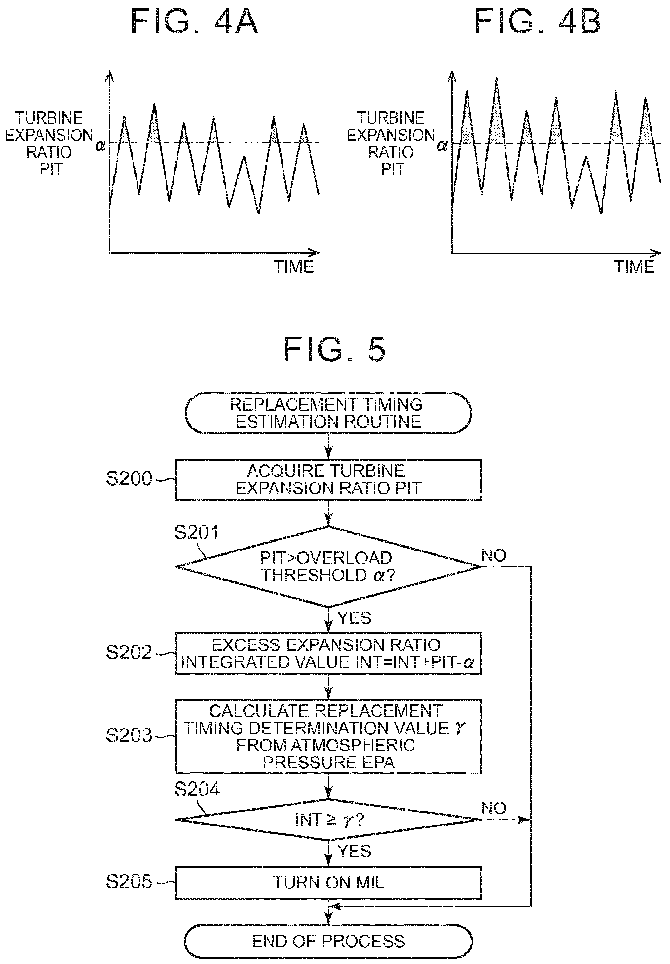

Hereinafter, a second embodiment of the turbocharger diagnosis device will be described in detail with reference to FIGS. 4 and 5. In the following description, the same reference numerals will be used to refer to the configurations common to both embodiments and detailed description thereof will be omitted.

In the first embodiment, the necessity of the replacement of the turbine wheel 19a is determined based on the number of times the turbine expansion ratio PIT exceeds the overload threshold α. However, even at the same number of times the turbine expansion ratio PIT exceeds the overload threshold α, the degree of the fatigue accumulated in the turbine wheel 19a varies depending on the extent to which the turbine expansion ratio PIT exceeds the overload threshold α. For example, a comparison between the case of FIG. 4A and the case of FIG. 4B shows that the turbine expansion ratio PIT exceeds the overload threshold α by a larger margin each time in the case of FIG. 4B although the turbine expansion ratio PIT exceeds the overload threshold α the same number of times and that the fatigue-based reduction in the strength of the turbine wheel 19a proceeds at a faster rate in the case of FIG. 4B.

Accordingly, in the case of a determination based solely on how many times the turbine expansion ratio PIT exceeds the overload threshold α, the value of the replacement timing determination value β needs to be set on the assumption of the progress of the overload-based strength reduction at the worst pace for the determination that the replacement is required to be reliably made before the strength of the turbine wheel 19a falls to or below an allowable level. Accordingly, in this case, it might be determined that the turbine wheel 19a needs to be replaced at a timing preceding a timing when the strength is reduced to a level at which the replacement is actually required.

In this embodiment, the deterioration evaluation value is used in the determination of the necessity of the replacement of the turbine wheel 19a. The deterioration evaluation value is operated to be increased as the difference between the overload threshold α and the turbine expansion ratio PIT increases when the turbine expansion ratio PIT exceeds the overload threshold α. Then, the necessity of the replacement can be determined with the actual situation of the reduction in the strength of the turbine wheel 19a better reflected.

FIG. 5 is a flowchart illustrating a replacement timing estimation routine that the electronic control unit 25 executes in the turbocharger diagnosis device according to this embodiment. The electronic control unit 25 executes the process of the routine that is illustrated in FIG. 5 at regular time intervals while the diesel engine 1 is in operation.

In Step S200, the first stage subsequent to an initiation of the process of this routine, the current value of the turbine expansion ratio PIT is acquired. Even in this embodiment, the electronic control unit 25 acquires the current value of the turbine expansion ratio PIT by calculating the ratio of the value of the inlet gas pressure PIN detected by the turbine inlet gas pressure sensor 30 to the value of the outlet gas pressure POUT detected by the turbine outlet gas pressure sensor 31 as the turbine expansion ratio PIT.

Then, in Step S201, it is determined whether or not the acquired current value of the turbine expansion ratio PIT exceeds the overload threshold α. When the current value of the turbine expansion ratio PIT does not exceed the overload threshold α (NO), the current process of this routine is terminated. When the current value of the turbine expansion ratio PIT exceeds the overload threshold α (YES), the process proceeds to Step S202.

After the process proceeds to Step S202, the difference between the overload threshold α and the turbine expansion ratio PIT (=PIT-α) is added in Step S202 to the value of an excess expansion ratio integrated value INT as the deterioration evaluation value. An initial value of "0" is set to the default value of the excess expansion ratio integrated value INT. The value is reset to the initial value "0" during the replacement of the turbine wheel 19a. The value of the excess expansion ratio integrated value INT corresponds to the hatched area in FIGS. 4A and 4B.

Then, in Step S203, a replacement timing determination value γ is calculated from the value of the atmospheric pressure EPA detected by the atmospheric pressure sensor 26. The calculation of the replacement timing determination value γ is performed by the use of the calculation map stored in the read write-only memory of the electronic control unit 25. This calculation of the replacement timing determination value γ in this case is performed such that the value of the replacement timing determination value γ decreases as the atmospheric pressure EPA decreases.

Then, in Step S204, it is determined whether or not the value of the excess expansion ratio integrated value INT is equal to or higher than the value of the replacement timing determination value γ that is calculated in Step S203. When the value of the excess expansion ratio integrated value INT is lower than the value of the replacement timing determination value γ (NO), the current process of this routine is terminated. When the value of the excess expansion ratio integrated value INT is equal to or higher than the value of the replacement timing determination value γ (YES), the process proceeds to Step S205. Then, in Step S205, the current process of this routine is terminated after the malfunction indication lamp 33 is turned on. The malfunction indication lamp 33 remains on in Step S205 in a case where the malfunction indication lamp 33 is already on in this case.

Hereinafter, a turbocharger diagnosis aspect resulting from the execution of the replacement timing estimation routine in the turbocharger diagnosis device according to this embodiment will be described. In the turbocharger diagnosis device according to this embodiment, the difference between the overload threshold α and the turbine expansion ratio PIT (=PIT-α) is added to the value of the excess expansion ratio integrated value INT when the turbine expansion ratio PIT exceeds the overload threshold α. Accordingly, when the turbine expansion ratio PIT exceeds the overload threshold α, the value of the excess expansion ratio integrated value INT is operated to be increased as the difference between the overload threshold α and the turbine expansion ratio PIT increases. The current value of the excess expansion ratio integrated value INT that is operated in this manner represents an integrated value of the difference between the overload threshold α and the turbine expansion ratio PIT in a period when the turbine expansion ratio PIT to date exceeds the overload threshold α. In this embodiment, the initial value of the excess expansion ratio integrated value INT is set to "0", and thus the current value of the excess expansion ratio integrated value INT corresponds to the total operation amount of the value from the initial value to date.

When the value of the excess expansion ratio integrated value INT becomes equal to or higher than the replacement timing determination value γ, the malfunction indication lamp 33 is turned on so that the user is notified of the necessity of the replacement of the turbine wheel 19a. In other words, in this embodiment, it is determined that the turbine wheel 19a needs to be replaced when the integrated value of the difference between the overload threshold α and the turbine expansion ratio PIT becomes equal to or higher than the replacement timing determination value γ in the period when the turbine expansion ratio PIT exceeds the overload threshold α. As described above, the overload-based reduction in the strength of the turbine wheel 19a increases as the extent to which the turbine expansion ratio PIT exceeds the overload threshold α increases. Accordingly, in this embodiment, the necessity of the replacement can be determined with the actual situation of the reduction in the strength of the turbine wheel 19a better reflected.

A lower value is set to the replacement timing determination value γ at a low atmospheric pressure than at a high atmospheric pressure. Accordingly, in a case where the turbocharger is used at a low atmospheric pressure, the replacement of the turbine wheel 19a is determined to be required in the stage in which the extent of the fatigue-based strength reduction is smaller.

The following effects can be achieved by the turbocharger diagnosis device according to this embodiment. In this embodiment, the electronic control unit 25 acquires the turbine expansion ratio PIT, and operates the value of the excess expansion ratio integrated value INT toward the increase side when the acquired turbine expansion ratio PIT exceeds the overload threshold α. In addition, the electronic control unit 25 determines that the turbine wheel 19a needs to be replaced when the total operation amount of the value of the excess expansion ratio integrated value INT from the initial value becomes equal to or larger than a specified value (replacement timing determination value γ). Accordingly, the necessity of the replacement of the turbine wheel 19a can be appropriately diagnosed.

In this embodiment, the electronic control unit 25 operates the value of the excess expansion ratio integrated value INT to be increased as the difference between the overload threshold α and the turbine expansion ratio PIT increases when the turbine expansion ratio PIT exceeds the overload threshold α. Accordingly, the necessity of the replacement of the turbine wheel 19a can be accurately determined in accordance with the actual situation of the overload-based strength reduction.

In this embodiment, the electronic control unit 25 sets the lower value to the replacement timing determination value γ at the low atmospheric pressure than at the high atmospheric pressure. Accordingly, the replacement of the turbine wheel 19a is determined to be required in the stage in which the total operation amount of the value of the excess expansion ratio integrated value INT from the initial value is smaller at the low atmospheric pressure than at the high atmospheric pressure. Accordingly, the necessity of the replacement of the turbine wheel 19a can be further appropriately determined in accordance with the difference in required strength depending on the environment of use.

The embodiments described above can be modified as follows. When the sensor (turbine outlet gas pressure sensor 31) that directly detects the outlet gas pressure POUT used in the acquisition of the turbine expansion ratio PIT is not disposed, the value can be obtained by estimation. For example, a pressure loss of the exhaust gas at a part of the exhaust passage 17 on the downstream side of the turbine 19 can be obtained in advance in an experiment or the like, and thus the outlet gas pressure POUT can be obtained by the pressure loss being added to the atmospheric pressure EPA.

In a case where the sensor (turbine inlet gas pressure sensor 30) that directly detects the inlet gas pressure PIN used in the acquisition of the turbine expansion ratio PIT is not disposed, the value can be obtained by estimation. For example, the inlet gas pressure PIN can be obtained by detection or estimation of the flow rate of the exhaust gas flowing into the turbine 19 and calculation from a relationship between the flow rate of the exhaust gas and the nozzle opening degree of the variable nozzle 21. The inlet gas pressure PIN can be estimated from the engine rotation speed NE, the fuel injection quantity, and the inlet gas temperature TIN as well. When a sensor is installed to detect the pressure of the exhaust gas at a part of the exhaust passage 17 on the upstream side of the variable nozzle 21, the inlet gas pressure PIN can be estimated from a value detected by the sensor, the engine rotation speed NE, and the fuel injection quantity.

In the embodiments described above, the replacement timing determination values β, γ change in accordance with the atmospheric pressure EPA. However, these may be fixed values not depending on the atmospheric pressure EPA. The value of the counter COUNT may be subtracted (operated toward a decrease side) by a constant value whenever the turbine expansion ratio PIT exceeds the overload threshold α. For example, a substantially similar determination can be made even when a value equivalent to the replacement timing determination value β according to the first embodiment is set to the initial value of the counter COUNT and the replacement is determined to be required when the value of the counter COUNT becomes a determination value of "0".

The operation amount of the value of the counter COUNT in a case where the turbine expansion ratio PIT exceeds the overload threshold α may be a constant value other than "1". Even in this case, the total operation amount of the value of the counter COUNT is in proportion to the number of times the turbine expansion ratio PIT exceeds the overload threshold α, and thus the determination of the necessity of the replacement can be made in a substantially similar manner to a case where the operation amount for each time is "1".

Insofar as a condition in which the reduction in the strength of the turbine wheel 19a occurs is satisfied even in a condition other than the turbine expansion ratio PIT exceeding the overload threshold α, the value of the counter COUNT may be operated even when the condition is satisfied. In a case where the turbine wheel 19a is subjected to the occurrence of the resonance, for example, the value of the counter COUNT may be operated even when the turbine rotation speed reaches the resonance rotation speed of the turbine wheel 19a. In a case where the degree of the reduction in the strength of the turbine wheel 19a differs between a case where the turbine expansion ratio PIT exceeds the overload threshold α and a case where the turbine rotation speed reaches the resonance rotation speed, the necessity of the replacement can be further accurately determined by the operation amounts of the counter COUNT pertaining to the respective situations being allowed to differ from each other.

The value of the excess expansion ratio integrated value INT may be operated toward the decreased side when the turbine expansion ratio PIT exceeds the overload threshold α. For example, a substantially similar determination can be made even when a value equivalent to the replacement timing determination value γ according to the second embodiment is set to the initial value of the excess expansion ratio integrated value INT and the replacement is determined to be required when the value of the excess expansion ratio integrated value INT becomes equal to or lower than "0".

In the second embodiment, the operation amount of the value of the excess expansion ratio integrated value INT in a case where the turbine expansion ratio PIT exceeds the overload threshold α may be an amount that increases as the difference between the turbine expansion ratio PIT and the overload threshold α increases instead of the difference between the turbine expansion ratio PIT and the overload threshold α itself. For example, a substantially similar determination can be made even when the value of the excess expansion ratio integrated value INT is operated by a value proportional to the difference.

The necessity of the replacement of the turbine wheel 19a may be determined based on a value other than the number of times the turbine expansion ratio PIT exceeds the overload threshold α (counter COUNT) and the integrated value of the amount by which the turbine expansion ratio PIT exceeds the overload threshold α (excess expansion ratio integrated value INT). For example, the necessity of the replacement can be determined by a total amount of time during which the turbine expansion ratio PIT exceeds the overload threshold α, an integrated value of a peak value of the turbine expansion ratio PIT pertaining to a case where the turbine expansion ratio PIT exceeds the overload threshold α, or the like being used as the deterioration evaluation value of the turbine wheel 19a. In any case, the necessity of the replacement of the turbine wheel 19a can be appropriately determined insofar as the deterioration evaluation value is operated toward a predetermined one of the increase side and the decrease side when the turbine expansion ratio PIT exceeds the overload threshold α and the replacement is determined to be required when the total operation amount of the value from the initial value of the deterioration evaluation value becomes equal to or higher than a specified value.

According to the embodiments described above, the turbocharger diagnosis device determines the necessity of the replacement of the turbine wheel 19a. However, determinations of the necessity of the replacement of members of the turbine 19 other than the turbine wheel 19a can also be made in a similar manner.

The turbocharger diagnosis device according to the embodiments described above is applied to the turbocharger that is mounted in the automotive diesel engine 1. However, the turbocharger diagnosis device can also be applied in a similar manner to turbochargers mounted in the other engines. In addition, the turbocharger diagnosis device can be applied to a turbocharger that lacks the variable nozzle 21.

## Claims

1. A diagnosis device for a turbocharger, the turbocharger mounted on an engine (1), the turbocharger including a turbine (19), and the turbocharger being configured to supercharge intake air by driving the turbine (19) with a flow force of exhaust gas of the engine (1), the diagnosis device characterize by comprising
an electronic control unit (25) configured to:
calculate a turbine expansion ratio (PIT) as a ratio of a pressure of the exhaust gas flowing into the turbine (19) to the pressure of the exhaust gas flowing out from the turbine (19);
operate a deterioration evaluation value toward a predetermined one of an increase side and a decrease side when the turbine expansion ratio (PIT) exceeds a threshold (α); and
determine a replacement timing of a turbine component (19a) when a total operation amount of the deterioration evaluation is equal to or larger than a specified value, the total operation amount being an operation amount from an initial value of the deterioration evaluation value.

2. The diagnosis device according to claim 1, wherein
the electronic control unit (25) is configured to operate the value of the deterioration evaluation value by a predetermined value every time the turbine expansion ratio (PIT) exceeds the threshold (α).

3. The diagnosis device according to claim 1, wherein
the electronic control unit (25) is configured to operate the value of the deterioration evaluation value to be increased as a difference between the threshold (α) and the turbine expansion ratio (PIT) increases when the turbine expansion ratio (PIT) exceeds the threshold (α).

4. The diagnosis device according to any one of claims 1 to 3, wherein
the specified value is lower at a low atmospheric pressure than at a high atmospheric pressure.

5. A diagnosis method for a turbocharger, the turbocharger mounted on an engine (1), the turbocharger including a turbine (19), and the turbocharger being configured to supercharge intake air by driving the turbine (19) with a flow force of exhaust gas of the engine (1), the diagnosis method **characterized by** comprising:
calculating a turbine expansion ratio (PIT) as a ratio of a pressure of the exhaust gas flowing into the turbine (19) to the pressure of the exhaust gas flowing out from the turbine (19);
operating a deterioration evaluation value toward a predetermined one of an increase side and a decrease side when the turbine expansion ratio (PIT) exceeds a threshold (α); and
determining a replacement timing of a turbine component (19a) when a total operation amount of the deterioration evaluation is equal to or larger than a specified value, the total operation amount being an operation amount from an initial value of the deterioration evaluation value.
